# EUROPEAN PATENT APPLICATION

(11) **EP 1 205 227 A1**
(43) Date of publication of application: **15.05.2002**
(21) Application number: 01126860.4
(22) Date of filing: 12.11.2001
(51) Int. Cl.: B01D 29/13, B01D 39/10, D21D 5/16

(54) **Method of making filtering baskets of machines for filtering fibers in aqueous suspension and filtering basket made by this method**

(30) Priority: 13.11.2000 IT VI000248
(71) Applicant: COMER S.p.A., 36030 San Vito di Leguzzano (IT)
(72) Inventor: Dalle Molle, Lino, 36013 Piovene Rocchette (Vi) (IT)
(74) Representative: Bonini, Ercole

(57) **Abstract**

A method of making filtering baskets (1) of machines for filtering fibers in aqueous suspension is disclosed, comprising the following steps: arranging two or more annular elements (2) mutually coaxial and spaced along an axial direction (X) defined by them; arranging inside the annular elements (2) a plurality of shape bars (3) with mainly longitudinal development, aligned according to said axial direction (X) and juxtaposed to each other; fixing each shaped bar (3) to the annular elements(2). The fixing operation comprises the following steps: sandblasting each bar (3) at zones (3c) that are in contact with the annular elements (2) and gluing the bars (3) to the annular elements (2) at said sandblasted zones (3c).

## Description

The present invention relates to a method of making filtering baskets of machines for filtering fibers in aqueous suspension.

The invention relates also to a filtering basket made according to the teachings of said method.

It is known that in the paper industry the aqueous suspensions containing cellulose, before being used in the production process, must be properly filtered in order to separate any possible contraries from the suspensions.

The filtration occurs through mechanical strainers treating the suspension and separating the polluting portions that are removed as waste, from the portion which is being fed to the subsequent treatments.

A mechanical strainer generally consists of a stationary filtering baskets inside which there is a rotary filtering basket, both basket having the lateral surface provided with gauged openings.

According to a known embodiment, the stationary basket has the lateral surface formed by a sheet provided with a plurality of holes or notches, that are arranged along the longitudinal axis of the basket.

These known baskets tend to be replaced by baskets consisting of a plurality of metal bars with mainly longitudinal development having a cross section of a general trapezoidal form and arranged along a cylindrical surface.

More particularly the bars are juxtaposed parallel to each other and are supported by a plurality of mutually coaxial and spaced annular elements to which the bars are fixed at the inner circumference.

The filtering surface so defined consists of the plurality of slits formed between adjacent bars.

In this way filtering baskets with greater efficiency are obtained because they have a greater working filtering surface, the total lateral surface being equal, in comparison with the known embodiments.

The bars and the annular elements are made of metal and preferably of stainless steel for a better resistance to corrosion.

According to a known prior art, the filtering baskets are manufactured by welding the bars juxtaposed to one another, arranged inside proper seats made in the supporting annular elements.

According to other prior embodiments, the bars are fixed to the annular elements by direct seaming or interposition of support elements.

The above mentioned prior art embodiments have a first drawback consisting of the difficulty to keep the distance between adjacent bars constant either during or after production, so as to keep the width of the slits constant on the full basket length.

Another drawback shown by said prior art baskets consists in that vibrations are generated in operation, causing frequent fatigue failures.

More particularly the presence of seaming or welding points of the bars to the annular support elements, creates zones of stress concentration causing initiation points of possible fatigue failures.

In the attempt to eliminate or at least reduce said drawbacks, embodiments are known in which the annular elements supporting the longitudinal bars are made of carbon fiber.

As everybody knows carbon fibers can be worked with machine tools like steel but they have a greater power of absorbing vibrations and this helps to reduce fatigue failure.

According to the prior art, application of bars to annular elements of carbon fibers occurs by interposition of metal elements which are provided with notches to receive the longitudinal bars and joint means for connection to the annular elements.

However also this embodiment has drawbacks because the metal bars are seamed to the corresponding support elements and consequently, although the vibrations are reduced in view of the annular elements made of carbon fibers, the seaming zones are still points of possible failure initiation.

A further drawback consists also in that production of the basket is more expensive relative to the known systems in view of the need to make support elements whose production has a non negligible cost.

Moreover said support elements must be connected both to the annular elements and the bars, with the attendant costs for the assembling operations.

The present invention aims at overcoming said drawbacks.

More particularly a first object of the invention is to provide a filtering basket having a longer useful life in comparison with equivalent filtering baskets of the prior art.

Another object of the invention is to provide a filtering basket having production costs lower than equivalent known filtering baskets.

The foregoing objects are attained with a method of making filtering baskets of machines for filtering fibers in aqueous suspension that according to the main claim comprises the following steps:
- arranging two or more annular elements mutually coaxial and spaced according to an axial direction defined by them;
- arranging inside said annular elements a plurality of shaped bars with mainly longitudinal development aligned along said axial direction and mutually juxtaposed;
- fixing each said shaped bar to said annular elements,
and is characterized in that said fixing operation comprises the following steps:
- sandblasting each of said bars at the zones that are in contact with said annular elements;
- and gluing said bars to said annular elements at said sandblasted zones.

According to the invention the filtering basket of machines for filtering fibers in aqueous suspension made according to the above described method comprises:
- two or more annular elements mutually coaxial and spaced according to an axial direction defined by them;
- a plurality of tie rods arranged parallel to said axial direction and adapted to connect said annular elements to each other to keep them in a stable and spaced position;
- a plurality of shaped bars with mainly longitudinal development arranged aligned according to said axial direction inside said annular elements, said bars being juxtaposed and spaced to define a plurality of slits forming the filtering surface of said basket;
- joint means for fixing each said bar to the corresponding annular element;
and is characterized in that said annular elements are made of carbon fibers and have a plurality of radial notches receiving said shaped bars which are fixed to said annular elements through said joining means consisting of an adhesive.

Said adhesives are preferably to part epoxy adhesives.

The zone of said bars where said adhesive is applied, is previously treated by sandblasting to improve the adhesion degree between bars and annular elements.

Advantageously the connection by gluing of the bars to the annular elements reduces the stress concentration at the joining points and consequently reduces also occurrence of fatigue failure.

Still advantageously production of the annular elements of carbon fibers reduces vibrations and also possibility of fatigue failure or breakage for resonance phenomena.

The foregoing objects and advantages will be better understood by the description of a preferred embodiment of the invention which is given as an illustrative and non limiting example with reference to the accompanying sheets of drawings in which:
- Fig. 1 is an isometric view of the filtering basket of the invention;
- Fig. 2 is a detail of the filtering basket of Fig. 1;
- Fig. 3 is a longitudinal sectional view on a reduced scale of the filtering basket of Fig. 1;
- Fig. 4 is a plan view of the filtering basket of Fig. 3;
- Fig. 5 is a detail of the sectional view of Fig. 3;
- Fig. 6 is a detail of the plan view of Fig. 4;
- Figs. 7, 8 and 9 show the phases of coupling the bars to the annular elements.

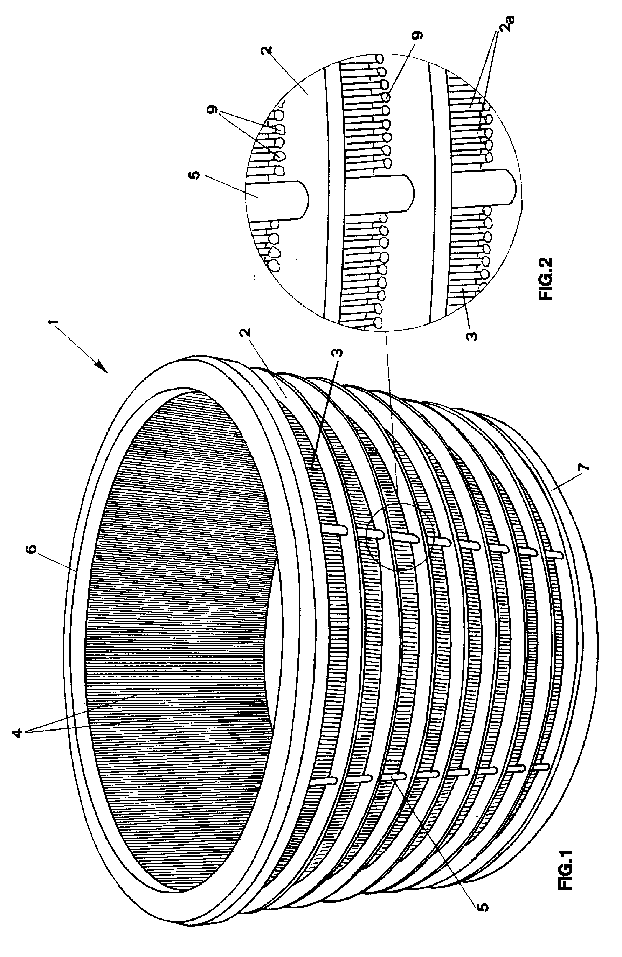

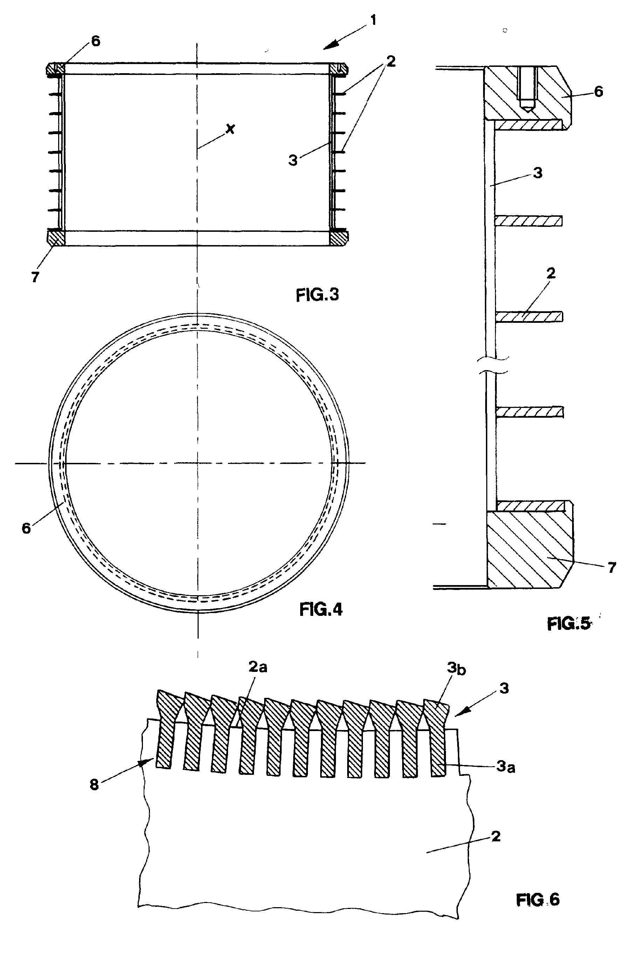

The filtering basket of the invention is shown in Figs. 1, 3 and 4 where is generally indicated with reference numeral 1.

Said basket is applied to machines for filtering fibers in aqueous suspension and comprises two or more annular elements 2 mutually coaxial and spaced along the axial direction X defined by them, supporting a plurality of shaped bars 3 with a mainly longitudinal development.

The shaped bars 3 are arranged aligned according to said axial direction X and are juxtaposed to each other so as to define a plurality of slits 4 defining the filtering surface of the basket.

The annular elements 2 are kept axially spaced from each other by tie rods 5 passing through holes made in said annular elements and having the ends anchored through fastening means such as nuts to closing flanges 6, 7.

According to the invention each said annular element 2 is made of carbon fibers and has a plurality of radial notches 8 made starting from its inner surface 2a.

Into each said notch 8 the body 3a with rectangular profile of a corresponding shaped bar 3 is inserted and has a shaped edge 3b having a generally trapezoidal transversal shape.

The shaped edges 3b of the bars are mutually parallel and close to define the slits 4 forming the filtering surface of the basket.

The annular elements 2 are so arranged that the notches 8 of each element are aligned with the notches of the adjacent annular elements so as to define a plurality of orders of mutually aligned notches along the axial direction X of the rotary basket 1 for receiving the bars 3.

After insertion into the notches 8, the bars 3 are fixed to the corresponding annular elements 2 through joining means that according to the invention consist of adhesive substances 9.

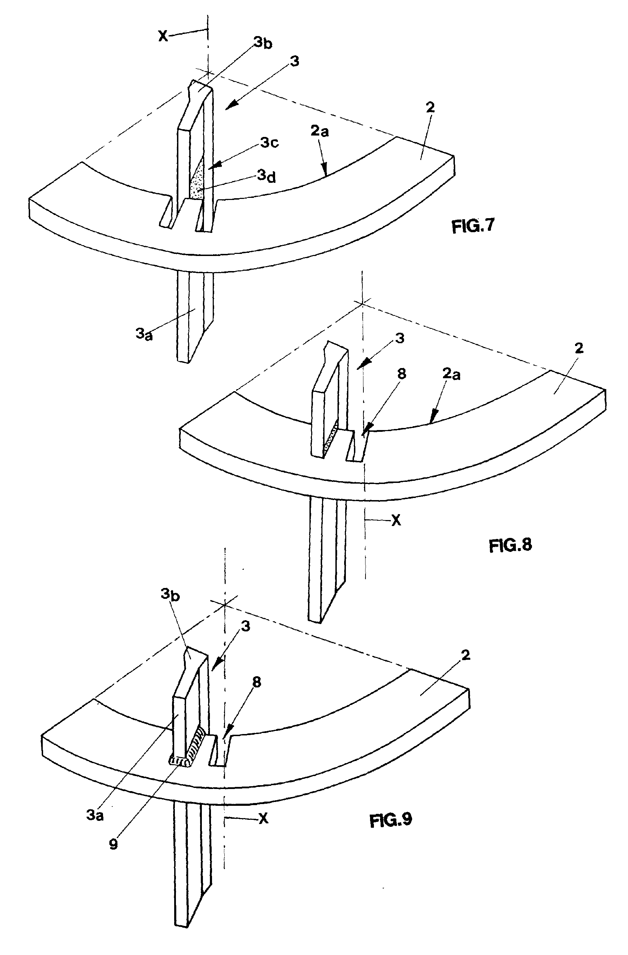

With reference to Fig. 7 one can see that the surface of the zone 3c of each bar 3 inserted into the corresponding notch 8, is sandblasted so as to create a plurality of microcraters 3d making easier to anchor the adhesive 9.

In this way use of adhesives to join the bars to the annular elements, avoids formation of breakage initiation points because continuity of the bar is not interrupted.

Moreover the fact that each shaped bar 3 is directly applied to the corresponding annular element 2, simplifies the operations of making and assembling the basket with consequent reduction of costs.

Finally the annular elements 2 made of carbon fibers, absorb the vibrations generated on their use, and together with use of adhesive substances to join the straight bars to the annular elements, help to reduce possibility of fatigue failure.

In order to operatively proceed to coupling and assembling the rotary basket after having connected the annular elements 2 through the tie rods 5 and applied the flanges 6 and 7, the sandblasted zone 3c of each bar 3 is placed at a notch 8 as shown in Fig. 7, and than is coupled to the annular elements 2 by inserting it into the notches 8 as shown in Fig. 8.

At this point as shown in Fig. 9, the two part adhesive 9 is applied at the sandblasted zone 3c projecting from the notch 8, causing it to adhere both to the bar 3 and the annular element 2, obtaining the connection shown in Fig. 9.

Preferably but not necessarily the adhesive is a thixotropic two part adhesive paste of the kind having a high mechanical resistance, high hardness and good chemical resistance curing at room temperature.

According to the foregoing description it is therefore clear that the filtering basket of the invention attains the intended objects.

It is to be pointed out that the described filtering basket constitutes the stationary filtering basket of any type of strainer. However the same may also be applied to the rotary basket of any kind of strainer.

Constructional modifications or variations may be made to the filtering basket of the invention, consisting for instance in making the bar receiving notches with butt straps other than those described and shown in the drawings.

It is to be understood that all the variations that should be made to the basket of the invention are to be considered protected by the present patent when falling within the scope of the appended claims.

## Claims

1. A method of making filtering baskets (1) of machines for filtering fibers in aqueous suspension, comprising the following steps:
- arranging one or more annular elements (2) mutually coaxial and spaced along an axial direction (X) defined by them;
- arranging inside said annular elements (2) a plurality of shaped bars (3) with mainly longitudinal development, aligned according to said axial direction (X) and mutually juxtaposed;
- fixing each of said shaped bars (3) to said annular elements (2),
**characterized in that** said fixing operation comprises the following steps:
- sandblasting each said bar (3) at the zone (3c) which is in contact with said annular elements (2);
- and gluing said bars (3) to said annular elements (2) at said sandblasted zone (3c).

2. A filtering basket (1) of machines for filtering fibers in aqueous suspension made according to the method of claim 1), comprising:
- two or more annular elements (2) mutually coaxial and spaced along an axial direction (X) defined by them;
- a plurality of tie rods (5) arranged parallel to said axial direction (X) and adapted to connect said annular elements (2) to each other to keep them in a stable and spaced position;
- a plurality of shaped bars (3) with mainly longitudinal development arranged aligned according to said axial direction (X) inside said annular elements (2), said bars (3) being mutually juxtaposed and spaced to define a plurality of slits (4) making the filtering surface of said basket (1);
- joining means to fix each said bar (3) to the corresponding annular element (2),
**characterized in that** said annular elements (2)are made of carbon fibers and have a plurality of radial notches (8) receiving said shaped bars (3) which are fixed to said annular elements (2) through said joining means consisting of an adhesive (9).

3. The filtering basket (1) according to claim 2) **characterized in that** each said bar (3) has a plurality of sandblasted zones (3c), each of said zones being coupled in a corresponding notch (8) of said annular elements (2) and receives said adhesive (9).

4. The filtering basket (1) according to any of claims 2 and 3 **characterized in that** said adhesive is a thixotropic two part adhesive paste.

5. The filtering basket (1) according to claim 2) **characterized in that** said notches (8) have a rectangular shape.

6. The filtering basket (1) according to claim 2) **characterized in that** each of said shaped bars (3) has a body (3a) with transversal rectangular profile connected with a shaped edge (3b) of a generally trapezoidal shape.

7. The filtering basket (1) according to claim 6) **characterized in that** said body (3a) with rectangular transversal profile is coupled in corresponding notches (8) of said annular elements (2).

8. The filtering basket (1) according to claim 6) **characterized in that** said shaped edge (3b) is projecting from said annular elements (2) and is facing the inside of said filtering basket (1).

9. The filtering basket (1) according to claim 1) **characterized in that** said tie rods (5) have the ends fixed to flanges (6, 7) parallel to each other and to annular elements (2) arranged between said flanges (6, 7).
